# EUROPEAN PATENT APPLICATION

(11) **EP 3 410 148 A1**
(43) Date of publication of application: **05.12.2018**
(21) Application number: 17174333.9
(22) Date of filing: 02.06.2017
(51) Int. Cl.: G01S 7/495, F41G 3/02, F41H 13/00, F41G 3/04

(54) **WEAPON SYSTEM**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

According to an aspect of the invention, there is provided a laser weapon system, comprising: one or more lasers for generating electromagnetic radiation; laser optics for directing the generated electromagnetic radiation at a target, the laser optics having an associated field of regard; and a control system, the control system being arranged to control which combination of laser and laser optics is used to engage the target, based on a probability of successfully engaging that target in relation to the field of regard of the laser optics of the combination.

## Description

The present invention relates generally to a weapon system, and in particular a laser weapon system. The present invention also relates generally to related control systems and methods.

In recent years, laser weapon systems have gone from being theoretically possible to realistic and practical implementations. Recent advances in laser technology have allowed laser weapon systems to become relatively portable, whilst still powerful enough to successfully engage targets.

Whilst the recent development in laser weapon systems has been both significant and impressive, the developments have largely been focussed on technology underpinning the size, portability, power and other intrinsic properties of a single laser weapon system. A single laser weapon system typically comprises one or more lasers coupled to a single dedicated set of laser optics for directing electromagnetic radiation (e.g. a laser beam) at a target. In other words, thoughts on, and development of, interaction between multiple lasers and/or laser optics has not been contemplated or developed, or at least contemplated and/or developed to the extent of the technology underpinning a single laser weapon system comprising one or more lasers coupled to a single dedicated set of laser objects. While, of course, development of intrinsic technology underpinning a system comprising one or more lasers and a single dedicated set of laser optics is important, so is the development of how multiple lasers and multiple sets of laser optics for optionally engaging one or more different targets, or better engaging a single target, is also important. This is particularly so for any practical implementation of a useful, practical laser weapon system.

It is an aim of example embodiments to at least partially overcome or avoid one more disadvantages of the prior art, described above or elsewhere, or to at least provide an improved or even an alternative laser weapon system to those already in existence.

According to a first aspect of the invention, there is provided a laser weapon system, comprising: one or more lasers for generating electromagnetic radiation; laser optics for directing the generated electromagnetic radiation at a target, the laser optics having an associated field of regard; and a control system, the control system being arranged to control which combination of laser and laser optics is used to engage the target, based on a probability of successfully engaging that target in relation to the field of regard of the laser optics of the combination.

The control system may be arranged to control which combination of laser and laser optics is used to engage the target, based on an increased or maximised probability of successfully engaging that target in relation to the field of regard of the laser optics of the combination, when compared with one or more other combinations.

One or more lasers may be together associated with a dedicated set of laser optics to form a laser-optics assembly, the laser weapon system comprising a plurality of such assemblies, and the control system may be arranged to determine which combination of laser and laser optics is used to engage the target by determining which assembly is to be used, based on a probability of successfully engaging that target in relation to the field of regard of the laser optics of the assembly forming the combination.

The laser weapon system may comprise a plurality of separate sets of laser optics, each set being arranged to receive generated electromagnetic radiation from one or more different lasers and to be separately able to direct the generated electromagnetic radiation at the target, and wherein the control system may be arranged to determine which combination of laser and laser optics is used to engage the target by determining which particular set of laser optics is to be used, based on a probability of successfully engaging that target in relation to the field of regard of the set of laser optics of the combination.

The control system may be arranged to route generated electromagnetic radiation to that particular set of laser optics.

The control system may be arranged to route generated electromagnetic radiation to that particular set of laser optics via the use of one or more moveable optical components.

In order to determine the probability, the control system may be arranged to receive sensory input from one or more sensors located proximate to the laser weapon system.

In order to determine the probability, the control system may be arranged to receive sensory input from one or more sensors of a platform which the laser weapon system forms a part of, or which the laser weapon system is connected to.

In order to determine the probability, the control system may be arranged to receive sensory input from one or more sensors located remote from the laser weapon system.

In order to determine the probability, the control system may be arranged to receive sensory input from one or more sensors separate to a platform which the laser weapon system forms a part of, or separate to a platform which the laser weapon system is connected to.

The probability of successfully engaging that target may be calculated by the controller.

The probability of successfully engaging that target may be based on one or more of, or a combination of: position and/or dynamics of a platform which the laser weapon system forms a part of, or which the laser weapon system is connected to; and/or position and/or dynamics of the target; and/or position and/or dynamics of one or more friendly assets; and/or position and/or dynamics of one or more non-combatants.

The laser optics may comprise an aperture, the aperture being a final optical element in the laser weapon system through which the electromagnetic radiation exits the weapon.

The control system may be arranged to monitor a position of an object other than the target, and to control a mask to prevent generated electromagnetic radiation being directed at that object.

According to a second aspect of the invention, there is provided a control system for use with a laser weapon system, the laser weapon system comprising: one or more lasers for generating electromagnetic radiation; laser optics for directing the generated electromagnetic radiation at a target, the laser optics having an associated field of regard; and the control system being arranged to control which combination of laser and laser optics is used to engage the target, based on a probability of successfully engaging that target in relation to the field of regard of the laser optics of the combination.

According to a third aspect of the invention, there is provided a method of controlling a laser weapon system, the laser weapon system comprising: one or more lasers for generating electromagnetic radiation; laser optics for directing the generated electromagnetic radiation at a target, the laser optics having an associated field of regard; and the method comprising: controlling which combination of laser and laser optics is used to engage the target, based on a probability of successfully engaging that target in relation to the field of regard of the laser optics of the combination.

According to a fourth aspect of the invention, there is provided a laser weapon system, comprising: one or more lasers for generating electromagnetic radiation; laser optics for directing the generated electromagnetic radiation at a target; and a control system, the control system being arranged to monitor a position of an object other than the target, and to control a mask to prevent generated electromagnetic radiation being directed at that object.

The control system may be arranged to allow the target to be continuously engaged unless and until: the object is close to being located in-between the laser optics and the target; and/or the object is in-between the laser optics and the target, at which point the object is masked to prevent generated electromagnetic radiation being directed at that object.

The mask may be a virtual mask.

The mask may be a virtual mask in that the controller is arranged to prevent one or more lasers from generating electromagnetic radiation in order to prevent generated electromagnetic radiation being directed at that object, as opposed to already generated electromagnetic radiation being physically blocked or otherwise physically deflected.

The mask may be a physical mask for physically blocking or otherwise physically deflecting already generated electromagnetic radiation, in order to prevent generated electromagnetic radiation being directed at that object.

The object may be fixed in position relative to at least a part of the one or more lasers, or at least a part of the laser optics.

The object may be a platform which the laser weapon system forms a part of, or which the laser weapon system is connected to.

The object may be moveable in position relative to the laser optics.

The object may comprise: one or more friendly assets; and/or one or more non-combatants.

The mask may be dynamically adjusted to take into account: movement of the target and/or the object; and/or movement of the laser optics; and/or a platform to which the optics is connected, or which the optics forms a part of.

In order to determine the mask, the control system may be arranged to receive sensory input from one or more sensors located proximate to the laser weapon system. The one or more sensors may be sensors of a platform which the laser weapon system forms a part of, or which the laser weapon system is connected to.

In order to determine the mask, the control system may be arranged to receive sensory input from one or more sensors located remote from the laser weapon system. The one or more sensors may be sensors separate to a platform which the laser weapon system forms a part of, or separate to a platform which the laser weapon system is connected to.

The mask may be calculated by the controller. The mask may be based on one or more of, or a combination of: position and/or dynamics of a platform which the laser weapon system forms a part of, or which the laser weapon system is connected to; and/or position and/or dynamics of the target; and/or position and/or dynamics of one or more friendly assets; and/or position and/or dynamics of one or more non-combatants.

The control system may be arranged to control which combination of laser and laser optics is used to engage the target, based on a probability of successfully engaging that target in relation to a field of regard of the laser optics of the combination.

According to a fifth aspect of the invention, there is provided a control system for a laser weapon system, the control system being arranged to monitor a position of an object other than a target of the laser weapon system, and to use a mask to prevent generated electromagnetic radiation being directed at that object.

According to a sixth aspect of the invention, there is provided a method of controlling a laser weapon system, comprising monitoring a position of an object other than a target of the laser weapon system, and to mask that object to prevent generated electromagnetic radiation being directed at that object.

It will be appreciate the above, the more detailed embodiments below, that one or more features from one aspect can be combined with and/or replace one or more features of another aspect, unless such combination or replacement would be mutually exclusive from the understanding of the skilled person after a reading of this entire disclosure.

For a better understanding of the invention, and to show how embodiments of the same may be carried into effect, reference will now be made, by way of example, to the accompanying diagrammatic Figures in which:
Figure 1 schematically depicts a proposed laser weapon;
Figure 2 schematically depicts a laser weapon system according to an example embodiment;
Figure 3 schematically depicts a laser weapon system according to another example embodiment;
Figure 4 schematically depicts routing of electromagnetic radiation, for use in the embodiment of Figure 3;
Figure 5 schematically depicts example methodology according to an example embodiment;
Figure 6 schematically depicts a laser weapon system according to a further example embodiment;
Figure 7 schematically depicts additional or alternative principles associated with the operation of the embodiment of Figure 6; and
Figure 8 schematically depicts methodology according to example embodiments.

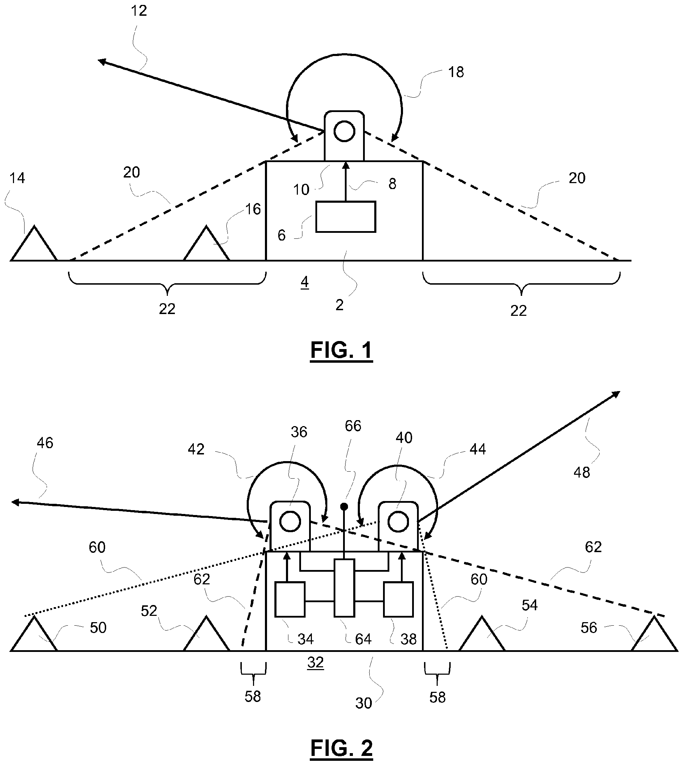

Figure 1 schematically depicts a platform provided with a laser weapon system. The platform 2 could be any object or structure useful for the particular application, and capable of carrying or otherwise being connected to a laser weapon system. For instance, the platform 2 could be a military vehicle, such as a land-based vehicle, or a naval vessel, or even an aircraft. The platform could be static (e.g. being a building or other structure) or be moveable. In this particular example, and strictly by way of example only, the platform 2 is a naval vessel located in a body of water 4, for example a sea or ocean.

In this particular example, the platform 2 houses a laser 6. The laser 6 is connected by one or more conduits or guides, for example optical fibres or waveguides 8, to laser optics 10. The laser optics 10 are for directing generated electromagnetic radiation 12 (e.g. laser energy or a laser beam) at a target 14, 16.

Details of the laser 6 and laser optics 10 are not provided herein, because such details are not necessary for understanding of the concepts described herein. That is, existing lasers and existing laser optics could be used to implement the inventive concept described further below. It is the control of the lasers or laser optics which is most important for the concepts according to example embodiments.

Returning to Figure 1, the laser optics 10 may be housed in, or be, a turret or other structure. Sometimes, the laser optics 10 might be described as comprising (which includes being) an aperture, the aperture being a final optical element in the laser weapon system through which electromagnetic radiation exits the weapon. "Laser optics" is the term used generally herein to describe one or more optical components that are used to direct generated electromagnetic radiation at a target.

The laser optics 10 shown in Figure 1 will be movable such that the laser optics 10 has a general field of a regard 18. This field of regard 18 is understood to include the entire possible view or targeting space possible via movement of the laser optics 10, to engage a target 14, 16. The laser optics 10 is typically provided with one or more mechanical stops or similar which limit 20 the field of regard 18 to prevent the laser optics inadvertently directing electromagnetic radiation at the platform 2.

In general, the laser weapon system of Figure 1 may work satisfactorily in most circumstances. However, improvements are indeed possible. For instance, it can be seen in Figure 1 that two targets are shown 14, 16. One target 14 is within the field of regard 18 of the laser optics 10. However, another target 16 is not within the field of regard 18, and is instead within a range 22 of the platform 2 that simple cannot be targeted or otherwise engaged by the laser weapon system, or more particularly the laser optics 10 of that system.

Ideally, the range 22 within which a target (e.g. target 16) cannot be engaged should be as small as possible, so as to increase the probability of being able to successfully engage a target in the vicinity, and in particular, close vicinity if needed, of the platform 2 comprising or in connection the laser weapon system. In accordance with the example embodiments, these problems can be overcome by providing one or more lasers for generating electromagnetic radiation, and laser optics (which includes one or more components) for directing the generated electromagnetic radiation at a target. Key is that the weapon system comprises a control system, where the control system is arranged to control which combination of laser and laser optics is used to engage the target. Importantly, the control system decides which combination to use based on a probability of successfully engaging the target in relation the field of regard of the laser optics of the combination. This approach allows multiple lasers and laser optics to be more efficiently and effectively managed and used, which not only allows for a target to be engaged more efficiently and efficiently in general, but can also allow for the laser weapon system to efficiently and effectively engage targets closer to a platform comprising the lasers and laser optics.

Figure 2 schematically depicts a platform 30, for example in the form of a naval vessel, located on a body of water 32. The platform 30 comprises a laser weapon system according to an example embodiment.

The laser weapon system comprises a first laser 34 for generating electromagnetic radiation for use by a first set of dedicated laser optics 36. The system also comprises a second laser 38 for generating electromagnetic radiation for use by a second dedicated set of laser optics 40.

Much as with the existing system of Figure 1, Figure 2 shows that each set of laser optics 36, 40 has an associated field of regard 42, 44 within which the respective laser optics 36, 40 can direct electromagnetic radiation 46, 48 (e.g. laser energy or a laser beam) at one or more targets 50, 52, 54, 56.

It can already be seen that distributing sets of laser optics 36, 40 about the platform 30 means that the minimum range 58 within which targets 50, 52, 54, 56 can be successfully engaged is significantly reduced with respect to the existing systems, for example as shown in Figure 1. This is because the fields of regard 42, 44 associated with the laser optics 36, 40 will have different physical stops and therefore different limits 60, 62 to the fields of regards 42, 44.

As shown in Figure 2, while the combined fields of regard 42, 44 mean that coverage is increased around and about the platform 30, successfully engaging a target 50, 52, 54, 56 around and about the platform 30 is not straightforward. For example, even in the simplistic view shown in Figure 2, it can be seen that targets 50, 52 are not within the field of regard 44 of laser optics 40. At the same time, targets 54, 56 are indeed within the field of regard 44 of optics 40. The reverse or opposite is true of the field of regard 42 of optics 36. So, without careful management of the laser optics 42, 44 and associated lasers 34, 38, a target could approach the platform without being engaged. In fact, depending on how the laser optics 36, 40 and associated lasers 34, 38 are controlled in combination (i.e. holistically), a target could in theory get closer to the platform 30 of Figure 2 than the platform of Figure 1, due to the different fields of regard of respective laser optics.

Importantly, then, the laser weapon system of Figure 2 also comprises a control system 64. The control system 64 is arranged to control which combination of laser optics 36, 40 and associated lasers 34, 38 is used to engage a particular target 50, 52, 54 56. The control is not arbitrary, but is instead based on a probability of successfully engaging a particular target in relation to the field of regard of the laser optics 36, 40 of the combination.

In some instances, the probability determination could be rather simplistic, for example being either certain (at least in terms of targeting) or zero. This is clearly visible in Figure 2, and as already described above, where laser optics 36 cannot possibly engage target 54, 56, whereas laser optics 40 can engage target 54, 56. So, in this situation, in combination with appropriate sensing 66, the controller will be able to readily determine which combination of laser 34, 38 and laser optics 36, 40 has the highest probability of successfully engaging the targets 50, 52, 54, 56. That is, when comparing the probability of optics 36 engaging targets 54, 56 with the probability of optics 40 engaging targets 54, 56, it will be quickly and readily apparent that an increased or maximised probability of engagement is possible with laser optics 40.

In Figure 2, one or more lasers may direct or otherwise provide electromagnetic radiation to a single set of dedicated optics. Together, this might form a laser-optics assembly, and, as shown in Figure 2, the control system 64 can determine or otherwise calculate which assembly is better used to engage a particular target 50, 52, 54 56. As described further below, different ways of achieving combinations of laser and laser optics is possible, depending on how the laser weapon system is set up or configured. That is, is may not be necessary to have a dedicated laser system for a dedicated set of laser optics.

As shown in Figure 2, in order to determine the probability of engaging a target, the control system 64 is arranged to receive sensory input from one or more sensors 66 located proximate to the laser weapon system, and in this case by one or more sensors 66 that form part or are otherwise connected to the platform 30 itself. It will be readily envisaged what sort of form the sensors might take, or be otherwise associated with for receiving sensory data, for example different forms of radar, audio, visual, global positioning systems, or similar, and potentially even feedback from users of the platform, for example in terms of which particular target or targets is or are to be engaged. So, a sensor includes a user input unit, or user interface. In alternative or additional examples, however, the control system 64 may be arranged to receive sensory input from one or more sensors located remote from the laser weapon system, for example from one or more sensors which are separate to the laser weapon system 64 and/or platform 30. For instance, such remote sensory information may be provided by one or more friendly assets, in the form of one more remote platforms or similar which might assist in providing targeting information or similar. These could be other vessels, vehicles, structures, users or similar that can communicate with the platform that comprises the laser weapon system.

As discussed above, the determination of the probability of successfully engaging a target might be a relatively simple calculation, and can simply be a case of whether or not a target can actually be engaged at all by the laser optics of a particular combination or assembly of the laser-optics. Sometimes, though, the calculation may be more complex or sophisticated, and/or dynamic in nature, for example being repeatedly updated to determine which of multiple laser optics are used to engage the target, possibly with the same or different combinations being used in parallel or in succession. For instance, the probability for successfully engaging the target that is calculated (or possible received) by the controller might optionally be based on one or more of, or a combination of: position and/or dynamics of the platform which the laser weapon system forms a part of, or which the laser weapon system is connected to; and/or position and/or dynamics of the target; and/or position and/or dynamics of one or more friendly assets; and/or position and/or dynamics of one or more non-combatants. For example, if there is relative movement between the platform and the target, then even though the target could be successfully engaged for a short period of time by particular laser-optics, it might well be calculated that a different set of laser optics, could, based on the current dynamics of the target, successfully engage the target for a longer period of time. That time could be a time necessary to disable or otherwise neutralise the target. Such calculations of probability may be based mainly on relatively straightforward geometry or similar, possibly in combination with data associated with the laser weapon system and/or target in terms of time for which the target has to be successfully engaged in order to satisfactorily neutralise the target or otherwise reach a satisfactory conclusion with respect to that target. So, it could easily be envisaged that over a period of time, different laser optics engage the same target at the same time, or in succession, as to the target moves around and about the platform, or the platform moves around and about the target. The control system will ensure that the target is engaged in the most effective manner.

It will be appreciated that with multiple laser optics being controlled at any one time, and in a dynamic environment, the risks of inadvertently directing electromagnetic radiation at the platform itself, or a friendly asset or non-combatant, could be significantly increased. Therefore, and as described in more detail further below, the control system may be arranged to monitor a position of an object other than the target, and control a mask (e.g. physical or virtual) to prevent generated electromagnetic radiation being directed at that object. Such a simple but effective implementation may vastly improve the effectiveness and/or safety of the laser weapon system as a whole.

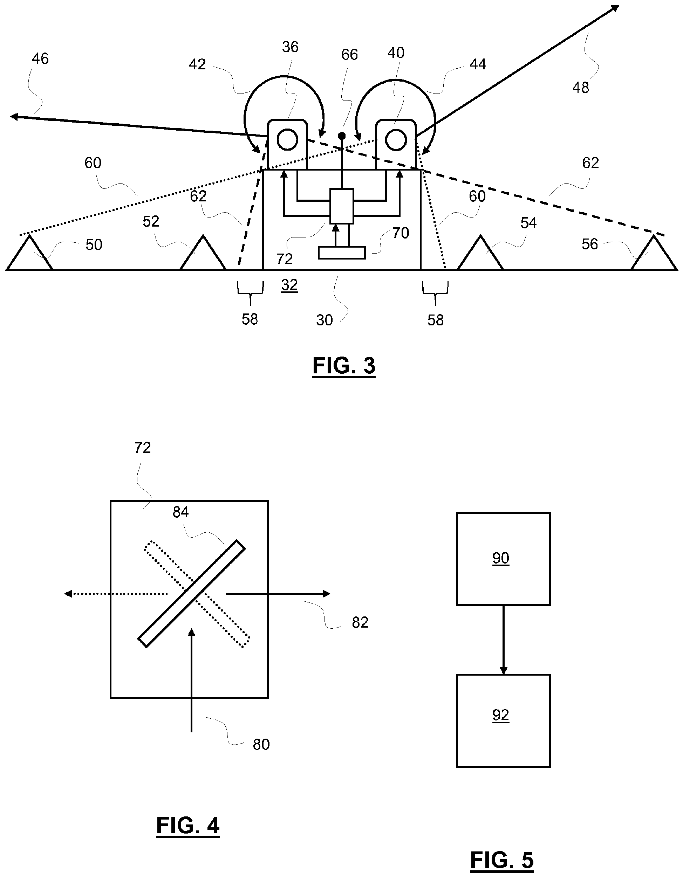

As discussed above in relation to Figure 2, one or more dedicated lasers may be associated with a dedicated set of laser optics for directing generated electromagnetic radiation at a single target. There may be more than one set of dedicated assemblies on any given platform, in order to improve coverage around and about the platform as already discussed. Other implementations are, of course, possible. As shown now in Figure 3, the setup of the laser weapon system is slightly different to that shown in and described with reference to Figure 2. The same features appearing in Figures 2 and 3 are given the same reference numerals, for brevity and simplicity. In Figure 3, the different sets of laser optics 36, 40 are still provided on the platform 30. However, instead of these laser optics 36, 40 each being fed with one or more dedicated lasers, Figure 3 shows that a single set or grouping of one or more lasers 70 is controlled by a control system 72 to be appropriately routed to the one or more laser optics 36, 40. So, in this particular example, instead of the control system 72 deciding which assembly of laser-laser optics to use, the control system 72 decides which laser optics 36, 40 generated electromagnetic radiation should be directed or otherwise routed to, for engaging a target.

In some examples, the arrangement of Figure 2 may be preferable, in that it may be possible, or easier, to simultaneously engage multiple targets with multiple laser optics, since each set of laser optics can be appropriately fed or provided with generated electromagnetic radiation for engaging that target. In another scenario, the arrangement of Figure 3 may be preferable, in that fewer lasers may be required in order to satisfactorily feed or provide the laser optics with generated electromagnetic radiation, thereby reducing the cost, weight, complexity, and so on of the system as a whole. It will be appreciated that, in some examples, there may be a combination of dedicated laser-laser optic assemblies (e.g. such as in Figure 2) and then a system where the number of sets of laser optics is greater than the number of lasers or laser groups that could satisfactorily provide generated electromagnetic radiation to those optics for engaging a target. For example, Figures 2 and 3 could represent different parts of the same platform. This combination might improve the flexibility of use of a system as whole.

Figure 4 shows how the control system 72 may appropriately route generated electromagnetic radiation 80 in a particular direction 82, for example to particular laser optics. In particular, one or more optical components 84 might be provided which are able to be controlled to appropriately route the electromagnetic radiation 80, 82. Typically, the component 84 or components will be movable to achieve this routing, for example being in the form or a movable or steerable mirror or prism or similar.

As described above, an entire laser weapon system has been described as being provided. However, it will also be appreciated that an existing laser weapon system might be improved via the control and control systems described above. That is, an existing laser weapon system might have its control system replaced with the sort of controls as described above to improve the operation of that laser system.

Figure 5 describes general methodology associated with example embodiments. The methodology is for a laser weapon comprising one or more lasers for generating electromagnetic radiation, and laser optics for directing the generated electromagnetic radiation at a target, the laser optics have an associated field of regard. The method might comprise controlling which combination of laser and laser optics is used to engage the target, based on a probability of successfully engaging that target in relation to the field of regard of the laser optics of the combination 90. The method might further comprise controlling the laser weapon system to engage the target with that combination 92.

It has already been described above that a laser weapon system may track a target in order to successfully engage with and neutralise or otherwise reach a conclusion with that target. There may be multiple targets. There may be multiple laser optics engaging with one or more different targets. Overall, then, there may be a rapidly changing, dynamic, situation where targets are being engaged in a rapidly changing manner in and amongst friendly assets and/or non-combatants. Such a situation, of course, increases the risk of an object other than the intended target being unintentionally exposed to the electromagnetic radiation that is generated and directed by the laser weapon system. That is, an object other than the intended target could inadvertently and/or unintentionally be targeted. It is of course desirable to avoid the situation.

According to an example embodiment, it has been realised that the risk of inadvertent and/or unintentional engaging or targeting of objects other than an intended target can be largely reduced or even avoided by employing a control system for the laser weapon system that is arranged to monitor a position of an object other than the target, and to control a mask to prevent generated electromagnetic radiation being directed at that object. So, for instance, it is already known to track and engage with a target using the laser weapon system. A relatively subtle but powerful modification of such a system is also to ensure that an object that is not be targeted is also monitored and tracked. That object is simply masked out, so that it is simply not possible to inadvertently direct electromagnetic radiation toward and into contact with that object.

The masking could be a physical mask, where a physical object is used to block the generated electromagnetic radiation. Other physical principles may be used to otherwise deflect the electromagnetic radiation away from the particular object, for example by way of refraction, diffraction, or similar.

A physical or virtual (see below) mask could ensure that when the object would otherwise be engaged, the optics, or generated radiation, is automatically directed to a location other than that object.

A perhaps simpler and more straightforward implementation, and perhaps even more powerful, is to employ a virtual mask, where the masking is implemented in software or similar, so that it is simply not possible for the radiation to be directed at the object in the first place. For instance, this could be achieved by monitoring the object, and ensuring it is not possible to generate radiation when the laser optics are directed towards the object, for example by turning off one or more lasers, including all lasers, that would otherwise be generating radiation for the particular set of optics that are directed toward the object. This could be far safer and easier to manage than an implementation where a beam is deflected away from the target, where it could be hard to monitor the deflected radiation with regard to objects that could fall in the path of such deflection. Also, a virtual mask means that a physical stop does not need to be provided that is capable of withstanding all, or a significant portion, of the energy of the generated radiation.

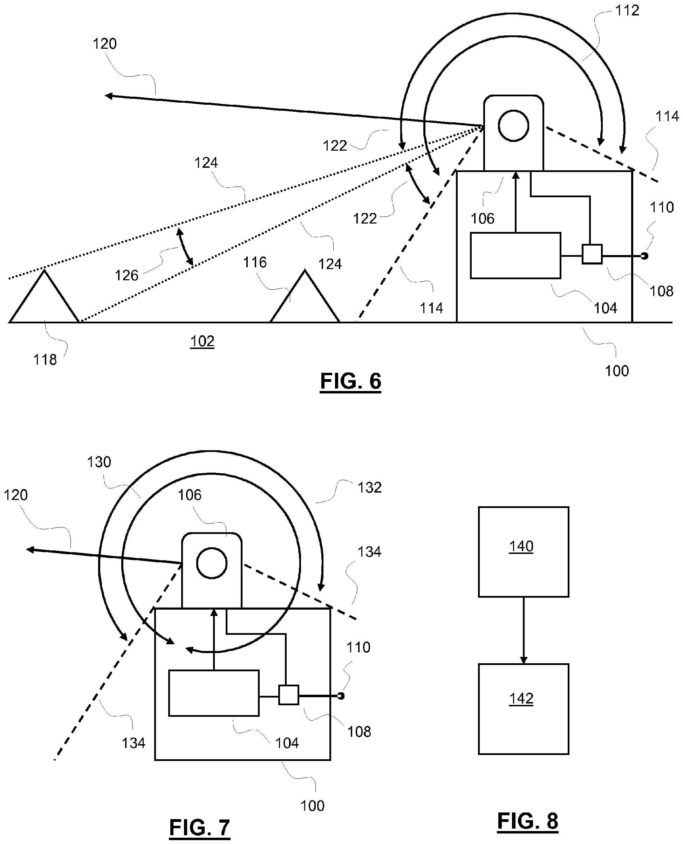

Figure 6 shows a platform 100, which in one example could take the form of a naval vessel, as described above. The platform 100 is located in a body of water 102. The platform 100 is provided with a laser weapon system according to an example embodiment. The laser weapon system comprises one or more lasers 104 capable of generating electromagnetic radiation, which can be routed to laser optics 106. A control system 108 can, as with other embodiments, control the steering or otherwise directing of the laser optics 106 to successfully engage targets in the vicinity of the platform 100. The target can be tracked using one or more sensors 110, which may be proximate to the platform 100 (including forming a part of the platform), or which, in other embodiments, could be remote from the platform 100, all as described above.

The laser optics 106 have a field of regard 112 within which an object can be targeted - i.e. electromagnetic radiation can be directed at objects within this field of regard 112 by the laser optics 106. Mechanical stops or similar may be in place to prevent or otherwise limit 114 the field of regard 112 extending over or otherwise overlapping with the platform 100 itself, to prevent the laser optics 106 causing damage to the platform 100 when directing generated radiation.

Figure 6 shows a target 116 within a general field of regard 112 of the laser optics 106. An object in the form of a friendly asset 118 is also shown as being within the general of field of regard 112 of the laser optics 106. As described above, the laser optics 106 may be used to direct electromagnetic radiation in the form of a laser beam or similar 120 at the target 116. However, as there is likely to be relative movement between the platform 100, laser optics 106, target 116, and friendly asset or object 118, it is clearly possible that the directed electromagnetic radiation 120 could, unintentionally, be directed at the object 118. Clearly, this could be undesirable. Therefore, in this embodiment, the control system 108 is arranged to monitor (or be fed with monitoring data based on) a position of the object 118, and to control a mask to prevent generated electromagnetic radiation being directed at the object 118.

Figure 6 shows how the mask may be achieved, at least at one particular instant in time. It can be seen that the general field of regard 112 of the laser optics 106 is, in practice, prevented or otherwise modified from being fully implementable or realisable. In particular, the field of regard when the mask is implemented by the control system 108 is restricted 122 to provide (or by providing) a mask 124 that spans an angular extent or space 126 at least occupied by the object 118. Even though, in theory, electromagnetic radiation could be directed in this angular or otherwise spatial extent 126 by the laser optics 106, the control system 108 prevents this from happening by way of mask 124, which might be described as mechanical or virtual stops or limits, preventing the radiation being directed in this region or zone or space. The object is in a safer environment as a result of the mask 124.

The mask that is used can be established and implemented in one of a number of different ways. In order to establish the mask, the position of the object 118 will need to be in some ways determined, and likely in combination with the position of one or more targets. This can be achieved by one or more sensors 110 forming part of, or working in relation to, the platform or similar, or from another friendly platform or asset as described above. Similarly, the mask may be calculated by the controller, and will optionally be based on one or more of, or a combination of, position and/or dynamics of a platform which laser weapon forms a part of, of which the laser weapon is to be connected to: and/or position and/or dynamics of a target; and/or position and/or dynamics of one or more friendly assets and/or position and/or dynamics of one or more non-combatant. In a related example, the control system could be fed with an already determined mask (calculate on the platform or remotely), and simply implement that mask.

Typically, the object that it is to be masked out will be a friendly asset or non-combatant, or even (as described below) the platform itself.

The masking could be implemented in hardware, for example with a mechanical, or optical, or electrical component being used in some way to stop or otherwise deflect the beam away from the object when, otherwise, the object would have electromagnetic radiation directed toward and into contact with it. The hardware could be moved, or its configuration otherwise changed, to implement the masking. However, a virtual mask is likely to be more suitable and flexible in practice. That is, rather than actually physically stopping or deflecting the generated electromagnetic radiation, it might be easier and simpler to control the masking in software, for example ensuring that it is not possible for the radiation to be generated when the laser optics are directed or are to be directed at the object in question. This might most conveniently be achieved by preventing one or more lasers of the lasers feeding the laser optics from generating radiation (at all, or to a harmful extent) when the object would otherwise subjected to directed/incident electromagnetic radiation.

It will therefore be appreciated from the above that the control system 108 allows a target to be continuously tracked and engaged unless and until: the object that it is not to be targeted is close to being located in-between the laser optics and the target; and/or the object is in-between the laser optics and the target. At this point, the object is masked to prevent radiation being directed at that object. In other words, the target might be continuously tracked with and engaged by the laser optics and related electromagnetic radiation (e.g. laser energy being incident on the target), and the engagement (e.g. incidence of laser energy), and not necessarily the tracking (e.g. movement of the optics), is interrupted when a laser optics-target path is crossed, or about to be crossed, by the monitored object.

It will be appreciated that the exact masking may vary dependent on the start and shut down times of the laser system and so on. That is, the powering up and powering down of the lasers may be in some way staggered so that damage to any such monitored object is limited or avoided, but at the same time minimising the time for which the target cannot be successfully engaged. Many different factors may feed into these operating principles, for example the speed at which electromagnetic radiation is being swept around or about a space of the platform in order to successfully engage a target, the expected intensity and therefore potential damage to the object at the distance from the laser optics, and so on. These are implementation details that will be understood and realised in a practical implementation. So, most important is the concept that has been generally described herein - masking out of an object that is not to be targeted and engaged with. The masking may be total, so that no radiation can be directed at the monitored object. This can be for the entire time for which the laser optics-target path is crossed, or about to be crossed, by the monitored object, or could be for a reduced time, to limit (and not necessarily prevent) damage. The masking may be partial, so that the full extent of maximum possible generated radiation is not directed at the object. So, the amount of radiation can be reduced (partially or to zero) for the entire time for which the laser optics-target path is crossed, or about to be crossed, by the monitored object, or could be for a reduced time, to limit (and not necessarily prevent) damage. In short, the masking is such that the generated radiation that is to be, or is being, directed at the target is at least partially reduced for the entire time for which the laser optics-target path is crossed, or about to be crossed, by the monitored object, or for a reduced time, to limit (and not necessarily prevent) damage.

The masking concept can be used in relation to a single laser- laser optic assembly, for example such as single assembly described above (in relation to the two assemblies of Figure 2, or even the assembly of Figure 1), or to a system employing fewer lasers or laser systems than there are sets of laser optics, where electromagnetic radiation is routed to the appropriate set of laser optics, again as described above (e.g. in relation to Figure 3).

Figure 6 showed how the general field of regard of the laser optics could be in some way limited to provide a mask to ensure that an object, such as a static or moveable object such as a friendly asset or non-combatant, could be masked from inadvertently being targeted with electromagnetic radiation. In Figure 6, the field of regard was mechanically limited from encompassing the platform 100 itself. Figure 7 shows that a field of regard 130 might not be limited by mechanical stops from encompassing the platform 100 itself. Instead, the masking described above in relation to non-combatant or friendly assets may be additionally or alternatively be modified to include the platform 100 itself as the object to be masked. That is, the general field of regard 130 of the laser optics 106 may be modified 132 to impose stops 134 which effectively mask out the platform 100 itself from being inadvertently targeted by the laser optics 106. As above, the stops, limits or otherwise masking may be virtual or software-like in nature, or implemented using a hardware based mask.

As with all embodiments described herein, the laser weapon system of Figure 6 or Figure 7 may be useful as a standalone or newly manufactured or installed system. However, it is possible that existing laser weapon systems could have their control systems replaced or otherwise upgraded with the control methodology described above. That is, an existing system could be modified to employ a controller that is arranged to monitor (either directly, with sensors, or indirectly, using data fed to the controller) a position of an object other than the target of the laser weapon system, and to use a mask to prevent generated electromagnetic radiation being directed at the object.

Figure 8 describes general methodology associated with recently described embodiments. The method is for controlling a laser weapon system, and comprises monitoring a position of an object other than a target of the laser weapon 140. The monitoring could be undertaken directly, with sensors in connection with the control system, or indirectly, using data fed to the control system. The data could be or assist in detailing the mask, or could be data via which a mask is calculate. The method then comprises masking that object to prevent generated electromagnetic radiation being directed at that object 142. Of course, the method might also comprise controlling the laser weapon to engage that target and, as above, without engaging the monitored object.

As with the physical systems described above, the methodology described in relation to Figures 5 and 8 can be combined.

The described control systems may be implemented in hardware, or software, or a combination of hardware and software. The described control systems can calculate the probability and/or mask, or be fed with information for use in implementing actions as a result of an already calculated probability or mask. That is, the control system can calculate the probability and/or mask and take actions in relation to the probability and/or mask, or simply take actions after being fed with information relating to the probability and/or mask.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A laser weapon system, comprising:
one or more lasers for generating electromagnetic radiation;
laser optics for directing the generated electromagnetic radiation at a target, the laser optics having an associated field of regard;
and
a control system, the control system being arranged to control which combination of laser and laser optics is used to engage the target, based on a probability of successfully engaging that target in relation to the field of regard of the laser optics of the combination.

2. The laser weapon of any preceding claim, wherein the control system is arranged to control which combination of laser and laser optics is used to engage the target, based on an increased or maximised probability of successfully engaging that target in relation to the field of regard of the laser optics of the combination, when compared with one or more other combinations.

3. The laser weapon system of claim 1 or claim 2, wherein one or more lasers are together associated with a dedicated set of laser optics to form a laser-optics assembly, the laser weapon system comprising a plurality of such assemblies, and the control system is arranged to determine which combination of laser and laser optics is used to engage the target by determining which assembly is to be used, based on a probability of successfully engaging that target in relation to the field of regard of the laser optics of the assembly forming the combination.

4. The laser weapon system of any of claims 1 and 2, comprising a plurality of separate sets of laser optics, each set being arranged to receive generated electromagnetic radiation from one or more different lasers and to be separately able to direct the generated electromagnetic radiation at the target, and wherein the control system is arranged to determine which combination of laser and laser optics is used to engage the target by determining which particular set of laser optics is to be used, based on a probability of successfully engaging that target in relation to the field of regard of the set of laser optics of the combination.

5. The laser weapon system of claim 4, wherein the control system is arranged to route generated electromagnetic radiation to that particular set of laser optics.

6. The laser weapon of claim 4 or claim 5, wherein the control system is arranged to route generated electromagnetic radiation to that particular set of laser optics via the use of one or more moveable optical components.

7. The laser weapon system of any preceding claim, wherein in order to determine the probability, the control system is arranged to receive sensory input from one or more sensors located proximate to the laser weapon system.

8. The laser weapon system of claim 7, wherein in order to determine the probability, the control system is arranged to receive sensory input from one or more sensors of a platform which the laser weapon system forms a part of, or which the laser weapon system is connected to.

9. The laser weapon system of any preceding claim, wherein in order to determine the probability, the control system is arranged to receive sensory input from one or more sensors located remote from the laser weapon system.

10. The laser weapon system of claim 9, wherein in order to determine the probability, the control system is arranged to receive sensory input from one or more sensors separate to a platform which the laser weapon system forms a part of, or separate to a platform which the laser weapon system is connected to.

11. The laser weapon system of any preceding claim, wherein the probability of successfully engaging that target is calculated by the controller, and is optionally based on one or more of, or a combination of:
position and/or dynamics of a platform which the laser weapon system forms a part of, or which the laser weapon system is connected to; and/or
position and/or dynamics of the target; and/or
position and/or dynamics of one or more friendly assets; and/or
position and/or dynamics of one or more non-combatants.

12. The laser weapon system of any preceding claim, wherein the laser optics comprises an aperture, the aperture being a final optical element in the laser weapon system through which the electromagnetic radiation exits the weapon.

13. The laser weapon system of any preceding claim, wherein the control system is arranged to monitor a position of an object other than the target, and to control a mask to prevent generated electromagnetic radiation being directed at that object.

14. A control system for use with a laser weapon system, the laser weapon system comprising:
one or more lasers for generating electromagnetic radiation;
laser optics for directing the generated electromagnetic radiation at a target, the laser optics having an associated field of regard;
and
the control system being arranged to control which combination of laser and laser optics is used to engage the target, based on a probability of successfully engaging that target in relation to the field of regard of the laser optics of the combination.

15. A method of controlling a laser weapon system, the laser weapon system comprising:
one or more lasers for generating electromagnetic radiation;
laser optics for directing the generated electromagnetic radiation at a target, the laser optics having an associated field of regard;
and
the method comprising:
controlling which combination of laser and laser optics is used to engage the target, based on a probability of successfully engaging that target in relation to the field of regard of the laser optics of the combination.
